# FASCICULE DE BREVET EUROPEEN

(11) **EP 0 465 387 B1**
(45) Date de publication et mention de la délivrance du brevet: **18.01.1995**
(21) Numéro de dépôt: 91420212.2
(22) Date de dépôt: 27.06.1991
(51) Int. Cl.: H02B 1/42

(54) **Châssis de fixation d'appareils électriques dans un coffret**
Fixierrahmen für elektrische Geräte in einem Kasten
Fixing frame for electrical apparatus in a box

(30) Priorité: 02.07.1990 FR 9008443
(43) Date de publication de la demande: 08.01.1992
(73) Titulaire: MERLIN GERIN, F-38240 Meylan (FR)
(72) Inventeur: Buet, Jacques, F-38050 Grenoble Cédex (FR); Bonnet, Jean-Marc, F-38050 Grenoble Cédex (FR)
(74) Mandataire: Ritzenthaler, Jacques

(56) Documents cités:
- EP-A- 0 123 788
- EP-A- 0 351 279

## Description

L'invention est relative à un châssis en forme de H pour un coffret d'appareillage électrique comprenant deux montants susceptibles d'être fixés au coffret et au moins un rail à profil symétrique de support des appareils modulaires encliquetables, ledit rail s'étendant transversalement entre les deux montants, en y étant fixé par des boulons avec interposition d'entretoises qui définissent le décalage entre le plan contenant les rails et le plan parallèle contenant les montants.

Un châssis du genre mentionné facilite le montage des appareils modulaires dans le coffret, ce dernier pouvant être du type décrit dans la demande de brevet déposée conjointement et intitulée : coffret d'appareils électriques basse tension.

La hauteur des appareils modulaires n'est pas uniforme et il est courant de compenser ces différences de hauteur par un écart différent entre le rail et les montants. Cet écart est obtenu, soit en utilisant des entretoises de longueurs différentes, soit en raccourcissant l'entretoise par sciage ou découpage. Dans le premier cas, le coffret est livré avec plusieurs entretoises de longueurs différentes dont seule une partie sera utilisée. Dans le deuxième cas, il est difficile d'obtenir une longueur précise d'entretoise, le sciage n'étant jamais parfait et laissant subsister des bavures gênantes.

La présente invention a pour but de permettre la réalisation d'un châssis à décalage entre les rails et les montants, facilement modifiable par raccourcissement des entretoises, tout en conservant une longueur d'entretoise parfaitement définie.

Le châssis selon la présente invention est caractérisé en ce que chaque entretoise comporte une pluralité de plateaux d'appui parallèles, qui sont échelonnés perpendiculairement le long de l'entretoise et définissent différentes hauteurs prédéterminées d'entretoise, que les plateaux sont solidarisés entre eux par des tiges sectionnables et que les montants ou les rails présentent en regard des tiges des passages des tronçons restants de tiges sectionnées pour permettre un appui direct des plateaux sur les montants ou les rails.

La longueur de l'entretoise et de ce fait, l'écartement entre le rail et le montant est défini par la position du dernier plateau, qui est indépendante du point de sectionnement de la tige de liaison entre les plateaux. Les tronçons restants des tiges sectionnées pénètrent dans les orifices ménagés dans le montant ou le rail, et participent au positionnement relatif. Ces tiges sont avantageusement tronconiques, d'une part pour faciliter leur sectionnement par sciage ou coupage dans la zone de faible section, et d'autre part pour constituer des pions de centrage lors de la mise en place de l'entretoise. Les entretoises sont disposées au niveau des vis de fixation des rails sur les montants, lesquels traversent des orifices, ménagés dans les plateaux successifs. Les plateaux peuvent être reliés entre eux par des tiges centrales tubulaires, traversées par la vis, mais selon un mode de mise en oeuvre préférentiel, chaque vis est encadrée par deux tiges de solidarisation des plateaux entre eux. Cette réalisation permet l'emploi de tiges de section moindre, facilitant leur coupage et elle confère à l'entretoise une rigidité accrue. Les tiges peuvent être d'une section quelconque, une section en croisillon donnant une grande rigidité. Chaque entretoise est avantageusement une pièce monobloc en matière plastique moulée, présentant à l'une de ses extrémités des crochets d'encliquetage sur le rail, au droit de l'orifice de passage de la vis de fixation, ou éventuellement sur le montant, cette dernière solution présentant certains inconvénients. Les orifices de passage de la vis ménagés dans les plateaux successifs, sont agencés en chicane pour former un fourreau de guidage de la vis. Au moins l'un de ces passages présente une zone d'étranglement, pour retenir la vis et éviter sa perte.

Selon un développement important de l'invention, le rail à profil symétrique d'encliquetage des appareils, comporte à ses deux extrémités des butées de retenue des appareils. Ces butées sont réalisées par des prolongements de l'âme du rail, lesquels prolongements sont repliés vers l'avant pour faire saillie au-delà des ailes de fixation des appareils. Pour faciliter ce repliement, il est avantageux de ménager dans la zone de pliage une ouverture, qui permet également la mise en place d'un tournevis pour supprimer cette butée d'extrémité lorsqu'elle est indésirable, notamment pour l'enlèvement d'une rangée d'appareils encliquetés sur le rail. Ces butées sont de préférence légèrement inclinées, de manière à diverger et à faciliter l'empilage des rails ainsi que l'introduction des câbles dans les goulottes adjacentes aux extrémités des rails, de la manière décrite dans la demande de brevet précitée.

Les montants sont constitués par des profilés en U susceptibles de s'emboîter sur des dés solidaires du fond du coffret. Les ailes du U sont légèrement divergentes pour faciliter le montage des montants sur les dés, en assurant un autocentrage. La forme trapèzoïdale des montants permet également d'accroître la rigidité de ces derniers.

La longueur des vis de fixation des rails sur les montants doit évidemment être adaptée à la longueur des entretoises, et pour éviter la fourniture de plusieurs vis de longueurs différentes, il est prévu selon l'invention de réaliser des vis présentant des gorges dans la zone de recoupe. Ces gorges ont un flanc chanfreiné du côté de la tête de vis, ce chanfrein constituant une entrée de filetage qui n'est pas affectée par l'opération de sciage et/ou de coupage et qui conserve de ce fait la facilité de vissage sur la vis raccourcie. La vis peut bien entendu comporter un nombre de gorges de recoupage approprié au nombre de plateaux d'appui de l'entretoise, un nombre limité de gorges étant dans la majorité des cas suffisant.

Les extrémités des rails et des montants sont arrondies pour éviter toute blessure, et les poinçonnages sont suivis d'une frappe écrouissant la bavure réalisée lors du poinçonnage et faisant disparaître ainsi toute zone coupante pouvant engendrer des blessures. D'éventuelles bavures dues au découpage sont éliminées de la même manière, en vue du même but.

D'autres avantages ressortiront plus clairement de la description qui va suivre, d'un mode de mise en oeuvre de l'invention donné à titre d'exemple non limitatif et représenté aux dessins annexés dans lesquels:
- la figure 1 est une vue schématique éclatée en perspective d'un coffret d'appareillage électrique contenant le châssis selon l'invention;
- la figure 2 est une vue en coupe du système de fixation du rail sur le montant du châssis,
- la figure 3 est une coupe suivant la ligne III-III de la figure 2;
- la figure 4 est une vue de détail de la figure 2 montrant le passage de la vis au droit d'un plateau de l'entretoise;
- les figures 5 et 6 sont des vues schématiques du montant du châssis respectivement en élévation et en vue de côté;
- les figures 7,8 et 9 sont des vues du rail à profil symétrique respectivement en élévation, en plan et vue de côté;
- la figure 10 est une vue en élévation d'une vis de fixation du rail sur le montant.

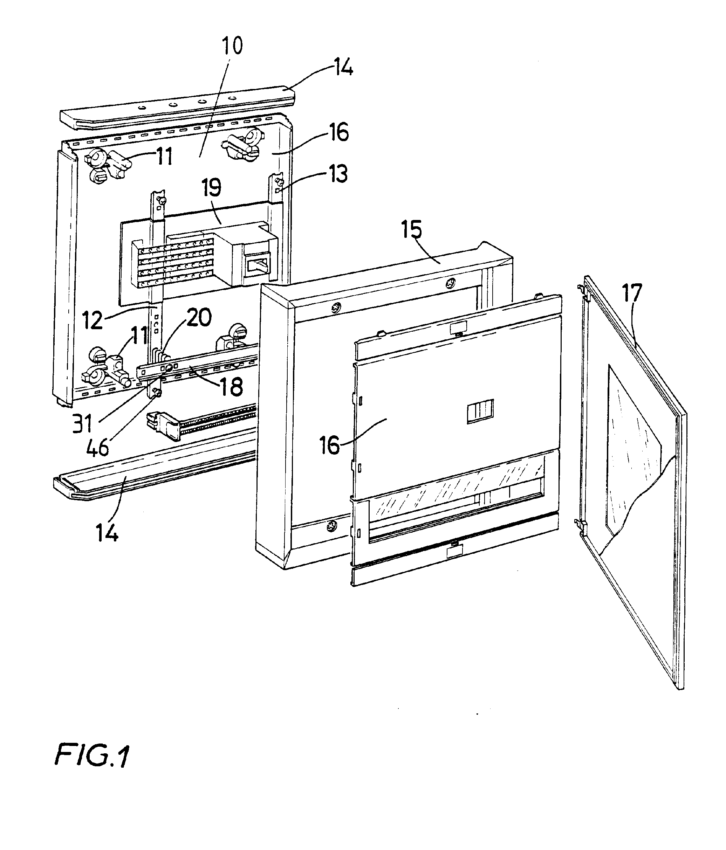

La figure 1, qui correspond à celle de la demande de brevet précitée, à laquelle on se reportera avantageusement pour de plus amples détails, illustre un coffret d'appareillage électrique susceptible de recevoir le châssis selon l'invention. On reconnait le fond 10 portant quatre piliers 11 de fixation des deux montants 12,13 du châssis. Le coffret comporte de plus, des plaques passe-câbles 14 inférieures et supérieures, et un boîtier 15 se fixant sur le fond 10. Le boîtier 15 reçoit des plastrons 16 et éventuellement une porte 17. Le châssis en forme de H comporte un ou plusieurs rails 18 à profil symétrique d'encliquetage d'appareils modulaires, et éventuellement une platine 19, les rails 18 et la platine 19 étant fixés transversalement sur les montants 12,13. Les rails 18 sont espacés des montants 12,13 par interposition d'entretoises 20 au droit des boulons 31 de fixation des rails 18 sur les montants 12,13.

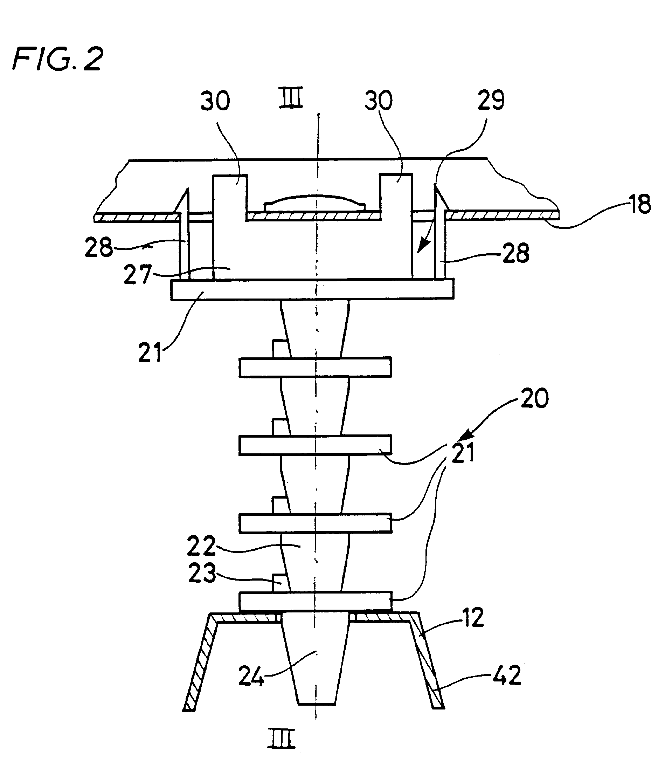

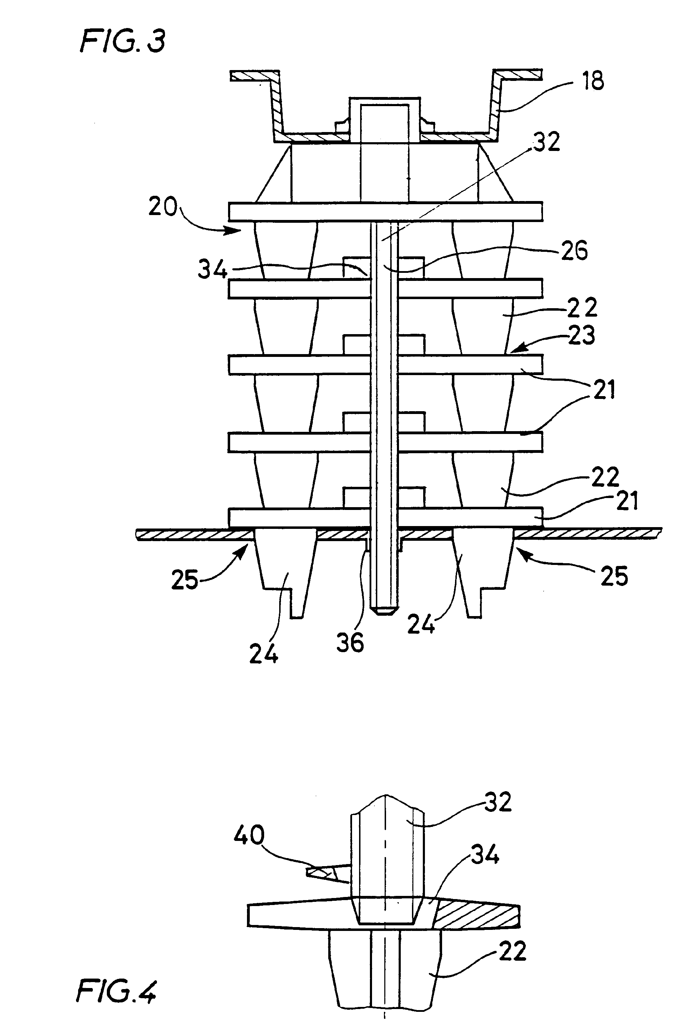

En se référant plus particulièrement aux figures 2 et 3, on voit que chaque entretoise, constituée par une pièce en matière plastique moulée, comporte une pluralité de plateaux 21 échelonnés le long de l'entretoise, et reliés entre eux par des tiges 22 intercalées entre les plateaux successifs 21. Chaque tige 22 de forme générale tronconique présente une zone 23 de section réduite, facilitant le sectionnement par sciage ou coupage pour raccourcir la longueur de l'entretoise. Cette zone de sectionnement 23, au sommet de la partie tronconique, est au niveau du raccordement au plateau adjacent 21. Le raccourcissement de l'entretoise 20 peut être effectué du côté du rail 18, ou de la manière représentée sur les figures 2 et 3 du côté du montant 12. Dans ce cas, la zone de sectionnement 23 de faible section des tiges 22, intercalées entre deux plateaux successifs, est située du côté du plateau 21 en regard du montant 12. Dans le cas d'un raccourcissement du côté du rail 18, cette zone de sectionnement 23 serait bien entendu du côté opposé. Les tiges 22 peuvent être de section constante, réduite dans la zone de sectionnement par exemple par une encoche, et leur section peut être circulaire ou polygonale, pleine ou creuse, par exemple en forme de croisillon. Le sectionnement des tiges 22 laisse subsister du côté du dernier plateau 21 en regard du montant 12, des pions 24 de centrage qui lors du montage s'insèrent dans des orifices 25 de section correspondante, ménagés dans le montant 12. La forme tronconique des pions 24 facilite le centrage de l'entretoise 20, lors de sa mise en place sur le montant 12, le dernier plateau 21 venant en appui de la face de support du montant 12 en définissant parfaitement la hauteur de l'entretoise 20. Les imperfections de sciage ou de coupage des tiges 22 qui se retrouvent à l'extrémité des pions 24, n'ont aucune répercussion sur la hauteur de l'entretoise 20 qui est définie par l'écartement des plateaux successifs 21. Deux plateaux successifs 21, de forme générale rectangulaire à bords arrondis, sont avantageusement solidarisés par deux tiges 22, disposées symétriquement de part et d'autre du centre 26 du plateau, en s'étendant dans le plan longitudinal perpendiculaire au plateau 21. (ce plan correspond au plan de la figure 3). Le dernier plateau 21 en regard du rail 18 porte un dé 27 d'appui sur l'âme du rail 18 ainsi que des crochets 28 d'encliquetage pénétrant en position de fixation sur le rail 18 dans des perforations 29 correspondantes, ménagées dans le rail 18. Le dé 27 est prolongé par des ergots 30 de centrage pénétrant dans les mêmes perforations 29 pour positionner correctement l'entretoise sur le rail 18. A chaque entretoise 20 est associé un boulon 31 dont la vis 32 traverse des orifices alignés 33,34,35 ménagés respectivement dans le rail 18, au centre 26 des plateaux 21, et dans le montant 12. La vis 32 s'étend dans l'axe longitudinal de l'entretoise 20 et après vissage dans le filetage 36, solidarise rigidement le rail 18 au montant 12 ou 13. Le filetage ou écrou 36 peut être intégré au montant 12 ou 13. L'embase de la tête 39 de la vis 32 est crantée pour éviter une rondelle et le desserrage.

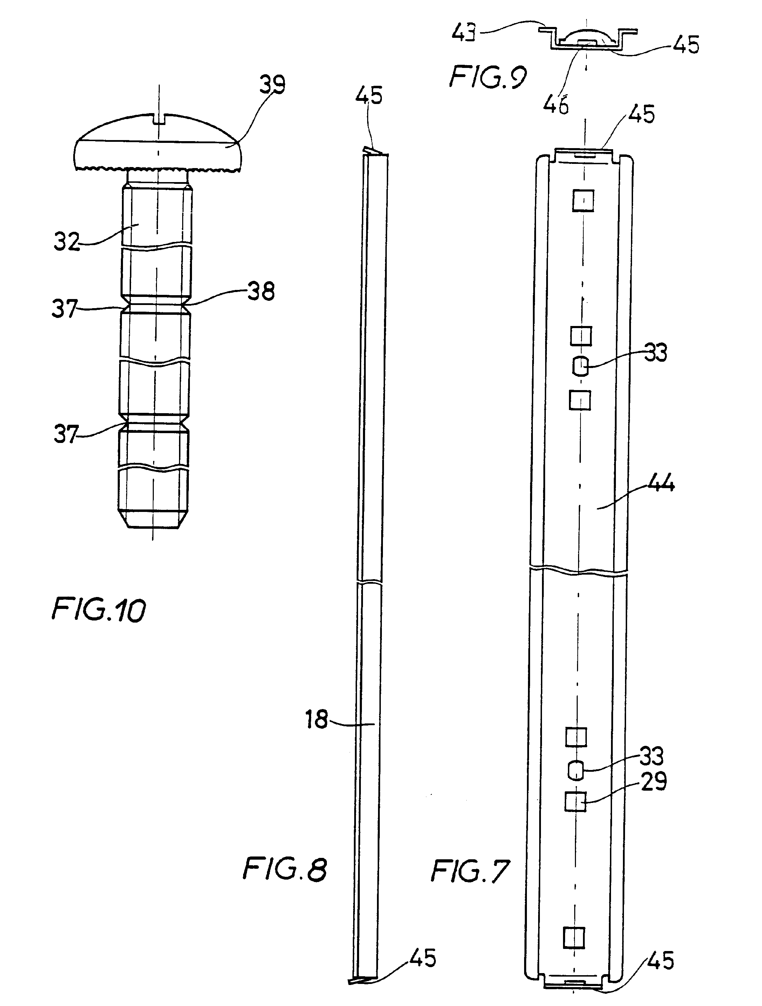

En se référant plus particulièrement à la figure 10, on voit que la vis 32 présente une ou plusieurs gorges de recoupe 37 pour réduire la longueur de la vis 32 et l'adapter à la longueur de l'entretoise 20. Le coffret est ainsi livré avec des entretoises 20 et des vis 32 de longueurs maximales, l'utilisateur ou le monteur raccourcissant les entretoises 20 et les vis 32 pour obtenir l'écartement voulu entre les rails 18 et les montants 12,13. Selon la présente invention, le flanc 38 de la gorge 37, disposé du côté de la tête 39 de la vis 32, est agencé en chanfrein d'entrée de filetage qui facilite le vissage de l'écrou après raccourcissement de la vis 32. Les bavures de coupage de la vis 32 sont localisées au fond de la gorge 37, et ne gênent pas la mise en place de l'écrou qui est centré par le chanfrein 38. Le nombre de gorges 37 peut être équivalent au nombre de plateaux 21 de l'entretoise 20, mais en général un nombre intermédiaire est suffisant.

La figure 4 illustre à échelle agrandie, l'orifice 34 de passage de la vis 32 dans un plateau 21. Au droit de l'orifice 34 le plateau 21 présente une saillie 40, agencée pour former une chicane de guidage de la vis 32. Les orifices 34 sont de forme tronconique pour guider la vis 32 lors de sa mise en place, et au moins l'un de ces orifices présente une section étranglée de retenue de la vis pour éviter sa perte.

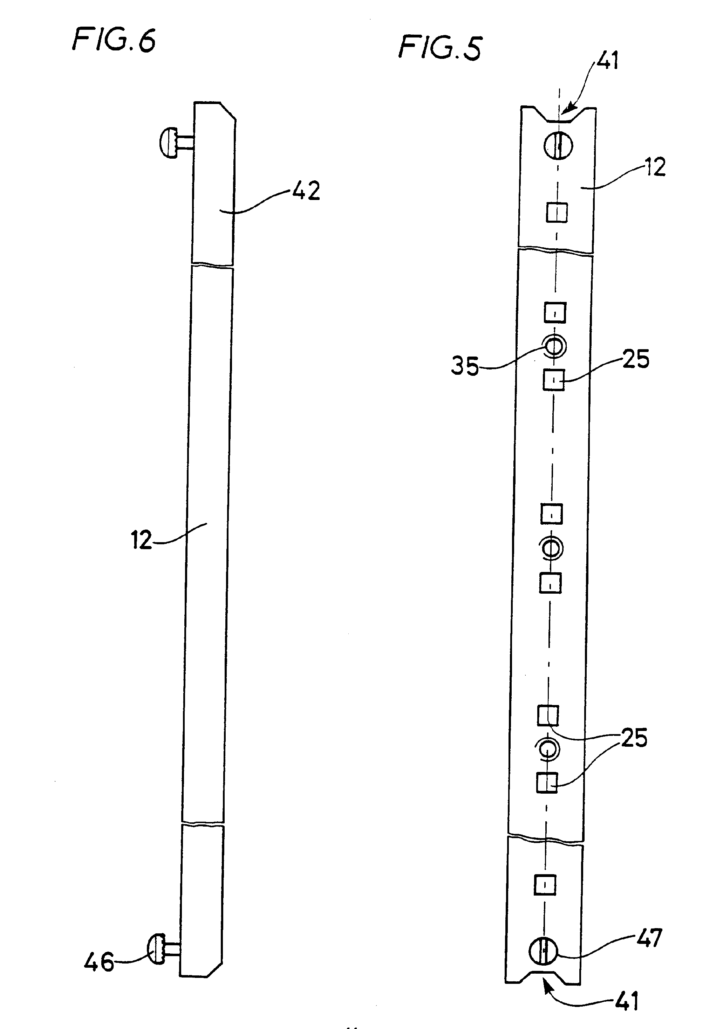

En se référant plus particulièrement aux figures 5 et 6 qui représentent un montant 12, qui est d'ailleurs identique au montant 13, on voit que le montant comporte plusieurs orifices 25,35 permettant la fixation d'un rail 18 ou de plusieurs rails 18 en différents emplacements. Les extrémités 41 du montant 12 sont échancrées pour coopérer avec les piliers 11 et faciliter l'auto-centrage du châssis lors de sa mise en place sur le fond 10, de la manière décrite en détail dans la demande de brevet précitée. Le montant 12 en forme de U a des ailes 42 divergentes, de manière à présenter une section trapèzoïdale de grande rigidité. Le profil divergent des ailes 42 facilite également le centrage du montant 12 lors de sa mise en place sur le pilier 11. La fixation sur le pilier 11 est réalisée par des vis 46 imperdables dont l'embase de la tête est crantée. Les vis 46 sont montées en force dans un trou 47 du montant et elles présentent à proximité de la tête une section réduite autorisant un retrait ou recul partiel facilitant le montage.

Les figures 7 à 9 illustrent le rail 18 à deux ailes 43 symétriques d'encliquetage des appareils électriques. De tels rails 18 sont bien connus et selon l'invention, l'âme 44 est prolongée aux deux extrémités par des pattes repliées 45 faisant saillie vers l'avant du rail 18 pour constituer des butées de retenue des appareils encliquetés sur le rail 18. Un orifice 46 de forme oblongue est ménagé dans la zone de pliage de la patte 45, d'une part pour faciliter ce pliage, et d'autre part pour l'introduction d'un tournevis permettant d'exercer sur la patte repliée 45 des efforts de pliage ou de rupture, lorsque la butée 45 doit être escamotée pour permettre un retrait des appareils par simple glissement le long du rail 18. Les butées 45 convergent vers le fond du coffret pour faciliter la mise en place des câbles de la manière décrite dans la demande de brevet précité. Tous les bords sont arrondis et les bavures de poinçonnage sont éliminées par tout moyen approprié afin d'éviter tout risque de blessure lors du montage.

Les rails 18 et les montants 12,13, peuvent bien entendu comporter d'autres poinçonnages ou orifices de fixation d'auxiliaires ou de frettes, et les vis de fixation peuvent être d'un type quelconque.

La réalisation du châssis selon l'invention ressort de l'exposé précédent et il suffit de rappeler que le montage est effectué sur place, les entretoises 20 et éventuellement les vis 32 étant raccourcies à la demande pour positionner correctement le rail 18. Toutes les vis sont avantageusement imperdables, ce qui facilite un démontage éventuel sans risque de perte de ces vis. Le châssis selon l'invention peut bien entendu être incorporé à des coffrets d'un type différent.

## Revendications

1. Châssis en forme de H pour un coffret d'appareillage électrique comprenant deux montants (12,13) susceptibles d'être fixés au coffret et au moins un rail (18) à profil symétrique de support des appareils modulaires encliquetables, ledit rail (18) s'étendant transversalement entre les deux montants (12,13), en y étant fixé par des boulons (31) avec interposition d'entretoises (20) qui définissent le décalage entre le plan contenant les rails (18) et le plan parallèle contenant les montants (12,13), caractérisé en ce que chaque entretoise (20) comporte une pluralité de plateaux (21) d'appui parallèles, qui sont échelonnés perpendiculairement le long de l'entretoise (20) et définissent différentes hauteurs prédéterminées d'entretoise, que les plateaux (21) sont solidarisés entre eux par des tiges (22) sectionnables et que les montants (12,13) ou les rails (18) présentent en regard des tiges (22) des passages (25) des tronçons restants (24) de tiges sectionnées pour permettre un appui direct des plateaux (21) sur les montants (12,13) ou les rails (18).

2. Châssis selon la revendication 1, caractérisé en ce que chaque tige (22) intercalée entre deux plateaux (21) est tronconique et que la zone de sectionnement (23) est au niveau de la faible section pour laisser subsister après sectionnement un pion conique (24) de centrage de l'entretoise (20) sur le montant (22) ou le rail (18).

3. Châssis selon la revendication 1 ou 2, caractérisé en ce que l'extrémité de l'entretoise (20) en matière plastique moulée, qui coopère avec le rail (18), porte des crochets d'encliquetage (28) sur un orifice (29) du rail (18) pour assujettir l'entretoise sur le rail et faciliter le montage sur le montant (12,13).

4. Châssis selon la revendication 1,2 ou 3, caractérisé en ce que les plateaux comportent des orifices (34) de passage de la vis (32) de fixation du rail (18) sur le montant, et que les tiges (22) de solidarisation des plateaux (21) encadrent de part et d'autre la vis de fixation (32).

5. Châssis selon la revendication 4, caractérisé en ce que lesdits orifices de passage (34) sont agencés en chicanes (40) de guidage de la vis (32) et qu'au moins l'un desdits orifices présente une zone d'étranglement pour freiner le retrait de la vis et éviter sa perte.

6. Châssis selon l'une quelconque des revendications précédentes, caractérisé en ce que la vis de fixation (32) du rail (18) sur le montant (12,13) comporte au moins une gorge de recoupe (37) pour un raccourcissement de la vis par découpe au niveau de la gorge et que le flanc (38) de la gorge (37) du côté de la tête (39) de la vis est agencé en chanfrein d'entrée de filetage qui facilite le vissage de l'écrou (36) sur la vis raccourcie.

7. Châssis selon l'une quelconque des revendications précédentes, caractérisé en ce que le rail (18) à profil symétrique comporte une butée d'extrémité (45) formée par un prolongement de l'âme (44) du rail, recourbé vers l'avant pour faire saillie du rail et coopérer avec la face latérale du boîtier du dernier appareil encliqueté sur le rail.

8. Châssis selon la revendication 7, caractérisé par un trou (45) poinçonné dans l'âme (44) du rail (18) dans la zone de pliage dudit prolongement (45) pour faciliter le pliage de la butée, notamment en vue de son escamotage.

9. Châssis selon la revendication 7 ou 8, caractérisé en ce que les butées d'extrémité (45) forment des pans inclinés, convergeant vers le fond du coffret pour faciliter l'entrée des câbles.

10. Châssis selon l'une quelconque des revendications précédentes, caractérisé en ce que les montants (12,13) en forme de U ont des ailes (42) légèrement divergentes pour accroître la rigidité et faciliter le montage par auto-centrage sur un dé de fixation.

## Patentansprüche

1. H-förmiges Trägergestell für einen zur Bestückung mit elektrischen Schaltgeräten dienenden Installationskasten, das zwei Längsträger (12, 13) zur Befestigung am Installationskasten und mindestens eine symmetrische Profilschiene (18) zur Aufschnappmontage von modularen Schaltgeräten umfaßt, wobei die Profilschiene (18) zwischen den beiden Längsträgern (12, 13) in Querrichtung angeordnet und mittels Schrauben (31) mit zwischengefügten Abstandshaltern (20) befestigt ist, die den Abstand zwischen der Ebene mit den Profilschienen (18) und der parallel dazu liegenden Ebene mit den Längsträgern (12, 13) bestimmen, dadurch gekennzeichnet, daß jeder Abstandshalter (20) mehrere parallele Stützböden (21) aufweist, die in der Längsachse des Abstandshalters (20) rechtwinklig angeordnet sind und unterschiedliche festgelegte Abstandshalterhöhen bestimmen, daß die Stützböden (21) über abtrennbare Verbindungszapfen (22) miteinander verbunden sind, und daß die Längsträger (12, 13) oder die Profilschienen (18) gegenüber den Verbindungszapfen (22) Durchführungsöffnungen (25) für die abgetrennten Zapfenstümpfe (24) aufweisen, um eine unmittelbare Abstützung der Stützböden (21) auf den Längsträgern (12, 13) oder den Profilschienen (18) zu ermöglichen.

2. Trägergestell nach Anspruch 1, dadurch gekennzeichnet, daß jeder zwischen zwei Stützböden (21) angeordnete Verbindungszapfen (22) kegelstumpfartig geformt ist und die Trennzone (23) im Bereich des geringeren Querschnitts angeordnet ist, damit nach der Abtrennung ein konischer Stumpf (24) zur Zentrierung des Abstandshalters (20) auf dem Längsträger (22) oder der Profilschiene (18) übrigbleibt.

3. Trägergestell nach Anspruch 1 oder 2, dadurch gekennzeichnet, daß das mit der Profilschiene (18) zusammenwirkende Ende des als Kunststoff-Formteil ausgeführten Abstandshalters (20) Rasthaken (28) zum Eingreifen in eine in der Profilschiene (18) ausgebildete Öffnung (29) aufweist, um den Abstandshalter auf der Profilschiene festzuspannen und die Montage auf dem Längsträger (12, 13) zu erleichtern.

4. Trägergestell nach Anspruch 1, 2 oder 3, dadurch gekennzeichnet, daß die Stützböden Öffnungen (34) zur Durchführung des Gewindeschafts (32) zur Befestigung der Profilschiene (18) auf dem Längsträger aufweisen und daß die Zapfen (22) zur Verbindung der Stützböden (21) den Gewindeschaft (32) zu beiden Seiten umgeben.

5. Trägergestell nach Anspruch 4, dadurch gekennzeichnet, daß die genannten Durchführungsöffnungen (34) als Führungsbuchsen (40) für den Gewindeschaft (32) ausgebildet sind und daß mindestens eine der genannten Öffnungen einen teilweise verengten Querschnitt aufweist, um die Schraube zurückzuhalten und ihren Verlust zu verhindern.

6. Trägergestell nach irgendeinem der vorhergehenden Ansprüche, dadurch gekennzeichnet, daß der Gewindeschaft (32) zur Befestigung der Profilschiene (18) auf dem Längsträger (12, 13) mindestens eine Trennkerbe (37) zur Verkürzung des Gewindeschafts durch Abtrennen in Höhe der Trennkerbe aufweist und daß die dem Schraubenkopf (39) zugewandte Flanke (38) der Trennkerbe (37) als angefaste Gewindekuppe ausgebildet ist, die das Aufschrauben der Mutter (36) auf den verkürzten Gewindeschaft erleichtert.

7. Trägergestell nach irgendeinem der vorhergehenden Ansprüche, dadurch gekennzeichnet, daß die symmetrische Profilschiene (18) einen durch eine Verlängerung des Mittelstegs (44) der Profilschiene gebildeten Endanschlag (45) aufweist, wobei die Verlängerung nach vorn gebogen ist, um aus der Profilschiene hervorzustehen und mit der Seitenfläche des Gehäuses des letzten auf die Profilschiene aufgeschnappten Schaltgeräts zusammenzuwirken.

8. Trägergestell nach Anspruch 7, dadurch gekennzeichnet, daß in den Mittelsteg (44) der Profilschiene (18) in der Biegezone der genannten Verlängerung (45) ein Langloch (45) eingestanzt ist, um das Umbiegen des Endanschlags, insbesondere das Wegbiegen nach unten zu erleichtern.

9. Trägergestell nach Anspruch 7 oder 8, dadurch gekennzeichnet, daß die Endanschläge (45) Schrägen bilden, die zum Unterteil des Installationskastens hin zusammenlaufen, um das Einführen der Kabel zu erleichtern.

10. Trägergestell nach irgendeinem der vorhergehenden Ansprüche, dadurch gekennzeichnet, daß die U-förmigen Längsträger (12, 13) leicht nach außen geneigte Schenkel (43) aufweisen, um die Steifigkeit zu erhöhen und die Montage durch Selbstzentrierung auf einem Befestigungs-Lagerzapfen zu erleichtern.

## Claims

1. An H-shaped frame for an electrical switchgear enclosure comprising two uprights (12, 13) designed to be fixed to the enclosure and at least one symmetrical profile rail (18) for support of the clip-on modular switchgear, said rail (18) extending transversely between the two uprights (12, 13), and being affixed thereto by fixing bolts (31) with interposed spacers (20) which define the offset between the plane containing the rails (18) and the parallel plane containing the uprights (12, 13), characterized in that each spacer (20) comprises a plurality of parallel bearing plates (21), which are located at intervals perpendicularly along the spacer (20) and define different predetermined heights of spacer, that the plates (21) are securedly united to one another by sectionable rods (22) and that the uprights (12, 13) or rails (18) present opposite the rods (22) passages (25) for the remaining sections (24) of the sectioned rods to enable the plates (21) to bear directly on the uprights (12, 13) or rails (18).

2. The frame according to claim 1, characterized in that each rod (22) inserted between two plates (21) is frustum shaped and that the sectioning zone (23) is at the level of the small cross-section to leave after sectioning a conical pin (24) for centering the spacer (20) on the upright (12, 13) or rail (18).

3. The frame according to claim 1 or 2, characterized in that the end of the spacer (20) made of moulded plastic material which cooperates with the rail (18) bears latches (28) for clipping onto an orifice (29) of the rail (18) to secure the spacer (20) on the rail and facilitate assembly on the upright (12, 13).

4. The frame according to claim 1, 2 or 3, characterized in that the plates comprise orifices (34) for passage of the screw (32) for fixing the rail (18) to the upright, and that the rods (22) securing the plates (21) frame the fixing screw (32) on both sides.

5. The frame according to claim 4, characterized in that said orifices (34) are arranged as chicanes (40) for guiding the screw (32) and that at least one of said orifices presents a strangling zone to hamper removal of the screw and prevent its being lost.

6. The frame according to any one of the foregoing claims, characterized in that the screw (32) for fixing the rail (18) to the upright (12, 13) comprises at least one cutting groove (37) for shortening the screw by cutting at the level of the groove and that the flank (38) of the groove (37) on the side towards the head (39) of the screw is arranged as a bevel for insertion in the thread for ease of screwing the nut (36) onto the shortened screw.

7. The frame according to any one of the foregoing claims, characterized in that the symmetrical profile rail (18) comprises an end stop (45) formed by an extension of the body (44) of the rail, curved forwards to protrude out from the rail and cooperate with the side panel of the case of the last switchgear unit clipped onto the rail.

8. The frame according to claim 7, characterized by a hole (29) punched in the body (44) of the rail (18) in the folding zone of said extension (45) to facilitate folding of the stop, notably with a view to its retraction.

9. The frame according to claim 7 or 8, characterized in that the end stops (45) formed inclined cants, converging towards the back of the enclosure for ease of cable insertion.

10. The frame according to any one of the foregoing claims, characterized in that the U-shaped uprights (12, 13) have slightly divergent wings (42) to increase the rigidity and facilitate assembly by self-centering on a fixing block.
